# EUROPÄISCHE PATENTSCHRIFT

(11) **EP 1 618 647 B1**
(45) Veröffentlichungstag und Bekanntmachung des Hinweises auf die Patenterteilung: **28.09.2016**
(21) Anmeldenummer: 03730087.8
(22) Anmeldetag: 22.05.2003
(51) Int. Cl.: H02K 29/03

(54) **MEHRPHASENMOTOR**
POLYPHASE MOTOR
MOTEUR POLYPHASE

(30) Priorität: 05.07.2002 DE 10230569; 17.04.2003 DE 10317749
(43) Veröffentlichungstag der Anmeldung: 25.01.2006
(73) Patentinhaber: SEW-EURODRIVE GmbH & Co. KG, 76646 Bruchsal (DE)
(72) Erfinder: NESTLER, Helmut, 76646 Bruchsal (DE); BOMKE, Ulrich, 76703 Kraichtal (DE); ULRICH, Peter, 50999 Köln (DE); MAHLEIN, Jochen, 76139 Karlsruhe (DE); SCHMIDT, Josef, 76676 Graben-Neudorf (DE)
(86) Internationale Anmeldenummer: PCT/EP2003/005343
(87) Internationale Veröffentlichungsnummer: WO 2004/006415

(56) Entgegenhaltungen:
- EP-A- 0 291 219
- EP-A- 0 295 718
- EP-A- 0 709 947
- EP-A- 1 056 187
- DE-A- 10 049 883
- DE-C- 421 917
- US-A- 5 057 731
- US-A- 5 675 196
- PATENT ABSTRACTS OF JAPAN vol. 2002, no. 09, 4. September 2002 (2002-09-04) & JP 2002 136005 A (HONDA MOTOR CO LTD), 10. Mai 2002 (2002-05-10)

## Beschreibung

Die Erfindung betrifft einen Mehrphasenmotor.

Aus der DE 100 49 883 ist ein Innenläufer-Mehrphasenmotor bekannt, bei dem die Spulenzahl der Wicklungen um 1 kleiner ist als die Polzahl. Nachteilig ist dabei, dass bei hohen Drehzahlen hohe Verluste auftreten. Auch ist der Wickelfaktor klein und es liegt somit keine optimale Ausnutzung des Wickelraumes vor.

Aus der EP 0 291 219 A3 und der EP 0 295 718 B1 ist jeweils ein Außenläufer-Motor bekannt, bei dem die Zahnflanken parallel gestaltet sind. Außerdem ist nur ein geringer Wickelfaktor erreicht.

Aus der DE 42 19 17 ist ein Innenläufer-Motor bekannt, bei dem die Zahnflanken parallel gestaltet sind. Außerdem ist nur ein geringer Wickelfaktor erreicht.

Der Erfindung liegt daher die Aufgabe zugrunde, einen Mehrphasenmotor weiterzubilden, der den Umweltschutz verbessert und einfach und kostengünstig herstellbar ist.

Erfindungsgemäß wird die Aufgabe bei dem Mehrphasenmotor nach den in Anspruch 1 angegebenen Merkmalen gelöst.

Von Vorteil ist dabei, dass bei hohen Drehzahlen verminderte Eisenverluste auftreten, insbesondere wegen der kleineren Speisefrequenz. Somit ist auch der Umweltschutz verbessert, da die Energie effektiver einsetzbar ist. Außerdem liegt ein verbesserter Wickelfaktor vor und der Wickelraum ist besser ausgenutzt. Auch die Cogging-Eigenschaften des Motors sind vorteilig. Darüber hinaus ist der Motor leicht, schnell und einfach, also auch kostengünstig herstellbar. Von Vorteil ist weiter, dass die Wicklungen schneller und einfacher einsetzbar sind und die Verletzungsgefahr für die Wicklungen verringerbar ist.

Erfindungsgemäß sind die Motormodule konstruktiv miteinander verbunden. Bei einer weiter vorteilhaften Ausgestaltung sind die Zahnflanken der Zähne des Primärteils bei eisenbehafteten Motoren nicht parallel gestaltet. Von Vorteil ist dabei, dass die Wicklung schnell und einfach bei der Fertigung einsetzbar sind. Außerdem ist ein zusätzlicher Freiheitsgrad für die optimale Gestaltung der Zähne vorhanden.

Die Erfindung wird nun anhand von Abbildungen näher erläutert:

Darstellung und Bezeichnungen sind an die der DE 100 49 883 weitest möglich angelehnt und sind zum Verständnis heranzuziehen. Die Unterschiede sind im einzigen Anspruch und der vorliegenden Beschreibung klar aufgezeigt.

Der Mehrphasenmotor umfasst Stator und Rotor.

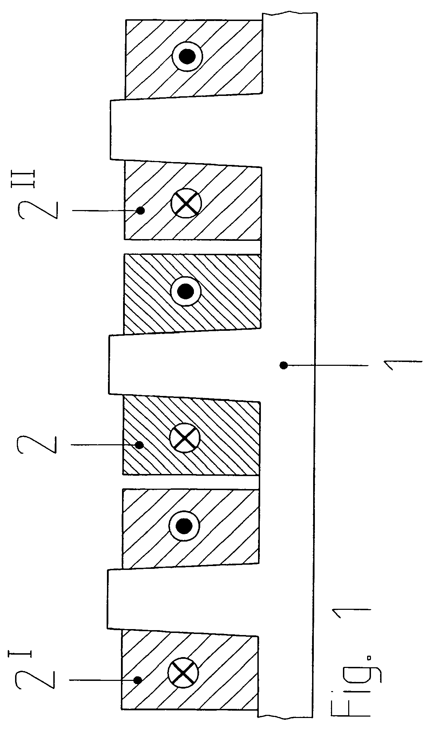

In der Figur 1 ist ein Querschnitt für ein erstes Ausführungsbeispiel gezeigt, der die trapezförmige Ausführung der Blech-Zähne 1 des Stators des Elektromotors zeigt. Die Wicklung 2 ist leicht, schnell und einfach aufzuschieben. Dabei ist die Zeichnung auf einen linearen Motor ebenso wie auf einen rotatorischen Motor umsetzbar.

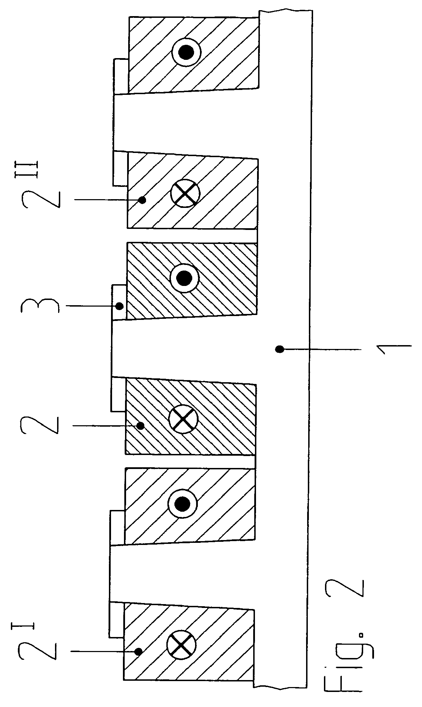

In der Figur 2 ist ein Querschnitt für ein zweites Ausführungsbeispiel gezeigt, bei dem zusätzliche Zahnköpfe 3 vorgesehen sind. Die Zahnköpfe sind aufsteckbar, also lösbar verbindbar, vorgesehen. Bei einer geblechten Ausführung des Stators wird der Zahnkopf jeweils über die Enden der aufeinander gestapelten Stator-Bleche gestülpt oder auf diese aufgeklebt oder mit diesen anderweitig fest verbunden.

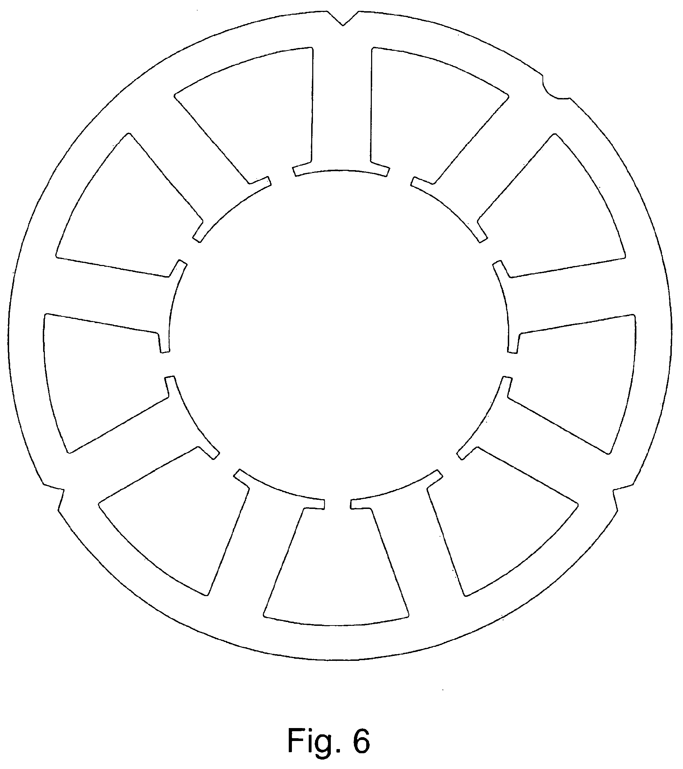

Figur 6 zeigt ein anderes Ausführungsbeispiel, wobei die Stator-Bleche jeweils einen eigenen Zahnkopf aufweisen. Somit ist auch der gesamte Kopf jedes Gesamt-Zahns geblecht ausgeführt.

In dem Ausführungsbeispiel nach Figur 1 und in den Ausführungsbeispielen nach Figur 2 mit lösbar verbindbarem Zahnkopf ist ein Aufschieben der Wicklungen ermöglicht. Hingegen ist in den Ausführungsbeispielen nach der Figur 6 mit fest verbundenem Zahnkopf ein Aufschieben nicht vorteilhaft ermöglicht. Ebenso gilt dies für das Ausführungsbeispiel nach Figur 2, wenn der Zahnkopf vor dem Bewickeln fest verbunden wurde oder integraler Bestandteil des Bleches wäre. In den beiden letztgenannten Fällen ist daher beim Herstellen ein **Bewickeln** mit einer Nadel vorgesehen, die sich um den Zahn herum bewegt und die Wicklung somit erzeugt. In den Figuren 1 und 2 ist eine Lücke zwischen den benachbarten Wicklungen zu sehen. Diese ist vorteiligerweise zum Durchführen einer Nadel vorgesehen, für die somit vorteiligerweise genügend Raum vorgesehen ist.

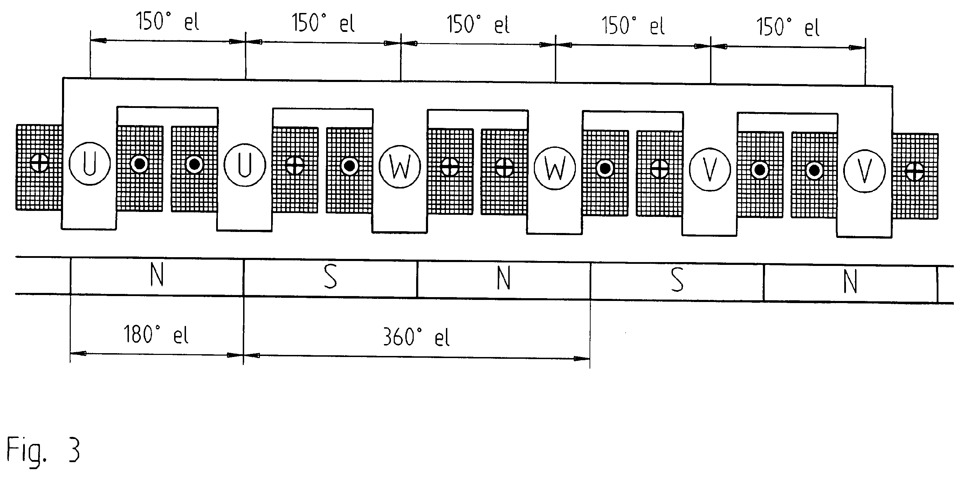

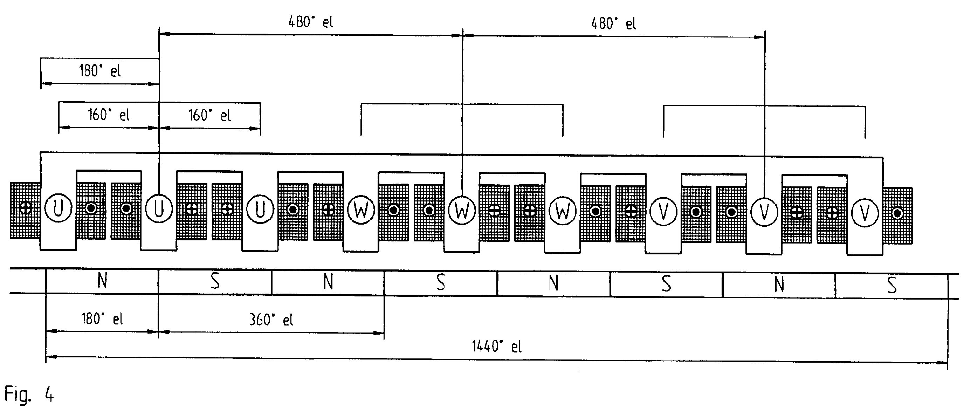

Der erfindungsgemäße Mehrphasenmotor nach den Figuren 1 - 6 weist bei hohen Drehzahlen jeweils nur kleine Verluste infolge der kleineren Speisefrequenz auf. Zudem ist bei der erfindungsgemäßen 8 poligen Maschine vorteiligerweise ein Wickelfaktor von 0,959 erreichbar. Dies ist 1,5% mehr als bei der 10 poligen Maschine nach DE 100 49 883.

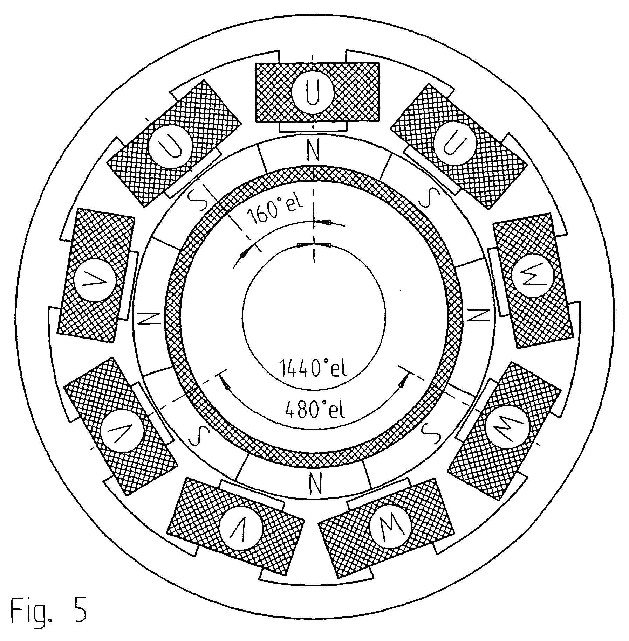

Bei dem erfindungsgemäßen Ausführungsbeispiel nach Figur 5 ist eine 8 polige rotatorische Maschine gezeigt mit 9 Nuten. Die zugehörigen elektrischen Winkel sind ersichtlich. Die phasenmäßige Kennzeichnung ist mit U,V,W ausgeführt. Außerdem ist ein Rotor mit Permanentmagneten N, S skizzenhaft gezeigt.

Figur 3 zeigt eine Linearmaschine statt einer rotatorischen Maschine nach dem selben Prinzip wie die vorstehend beschriebenen rotatorischen Motoren.

Figur 4 zeigt eine Linearmaschine statt einer rotatorischen Maschine nach dem selben Prinzip wie die vorstehend beschriebenen rotatorischen Motoren, wobei das Ausführungsbeispiel nach Figur 4 auch vorteilig rotatorisch ausführbar ist.

### Bezugszeichenliste

- 1: Blech-Zahn
- 2, 2', 2": Wicklung
- 3: Zahnkopf

## Patentansprüche

1. Mehrphasenmotor mit Wicklungen ohne Spulenüberlappung,
wobei mehrere Spulen einer Phase nebeneinander und nicht überlappend als Spulengruppe einer Phase und eine der Phasenzahl der Wicklung (2) entsprechende Anzahl solcher Spulengruppen ebenfalls nebeneinander ohne Überlappung ein Motormodul bilden, wobei die Gesamtzahl der Spulen ganzzahlig durch die Phasenzahl der Wicklung (2) teilbar und um Eins größer als die von dem Motormodul überdeckte Polzahl des Sekundärteils ist und die Wicklung (2) des gesamten Motors aus einem oder mehreren dieser Motormodule besteht
wobei die Zähne (1) des geblecht ausgeführten Primärteils einen trapezförmigen Querschnitt aufweisen,
wobei jeder Zahn (1) einen nicht fest verbundenen Zahnkopf (3) aufweist, der über die Enden der aufeinander gestapelten Stator-Bleche gestülpt ist,
wobei der Motor derart ausgeführt ist, dass die Wicklungen (2) mit einer um den jeweiligen Zahn (1) herum bewegbaren Nadel erzeugbar sind,
wobei zwischen den Wicklungen (2) Lücken vorgesehen sind zur Durchführung einer Nadel,
wobei der Motor ein Innenläufer ist,
wobei für die Reihung von Motormodulen diese derart ausgeführt sind, dass ihre Primärteile jeweils eine geradzahlige Polzahl des Sekundärteils überdecken,
wobei die Motormodule konstruktiv miteinander verbunden sind,
wobei der mittige Abstand zwischen zwei Spulengruppen immer genau 1/3 desjenigen elektrischen Winkels beträgt, welcher durch die durch das Primärteil überdeckten Pole gebildet wird, und die Spulenabstände innerhalb der Spulengruppen einer Phase so weit gedehnt vorgesehen sind, dass sich gleiche Spulenweite im Motormodul und damit auch gleiche Zahnabstände bei eisenbehafteten Primärteilen ergeben.

## Claims

1. Polyphase motor having windings without coil overlapping,
wherein a plurality of coils of a phase next to one another and not overlapping as a coil group of a phase, and a number of such coil groups corresponding to the number of phases of the winding (2) likewise next to one another without overlapping, form a motor module, the total number of coils being integrally divisible by the number of phases of the winding (2) and being one greater than the number of poles of the secondary part covered by the motor module, and the winding (2) of the entire motor being composed of one or more of these motor modules,
wherein the teeth (1) of the primary part of laminated design have a trapezoidal cross-section,
wherein each tooth (1) has a tooth tip (3) which is not fixedly connected and which is put over the ends of the stator laminations stacked on top of one another,
wherein the motor is configured in such a way that the windings (2) are producible with a needle movable around the respective tooth (1),
wherein gaps are provided between the windings (2) for leading a needle therethrough,
wherein the motor is an internal rotor,
wherein for the stringing-together of motor modules they are configured in such a way that their primary parts each cover an even number of poles of the secondary part,
wherein the motor modules are structurally connected to one another,
wherein the centre distance between two coil groups is always exactly 1/3 of that electrical angle which is formed by the poles covered by the primary part, and the coil spacings within the coil groups of a phase are provided in a manner extended such that an equal coil span in the motor module results and thus also equal tooth spacings in iron-containing primary parts result.

## Revendications

1. Moteur polyphasé comprenant des enroulements sans chevauchement de bobines,
dans lequel plusieurs bobines d'une même phase, adjacentes et ne se chevauchant pas constituent un groupe de bobines d'une phase et un nombre correspondant au nombre de phases de l'enroulement (2) de tels groupes de bobines, également adjacents et ne se chevauchant pas, forment un module de moteur, le nombre total des bobines étant divisible sans reste par le nombre de phases de l'enroulement (2) et est supérieur de un au nombre de pôles de la partie secondaire recouverts par le module de moteur et l'enroulement (2) du moteur entier est constitué d'un ou de plusieurs de ces modules de moteur,
dans lequel les dents (1) de la partie primaire réalisée en tôle feuilletée présentent une section transversale trapézoïdale,
dans lequel chaque dent (1) présente une tête de dent (3) non reliée rigidement, qui est retournée sur les extrémités des tôles de stator empilées les unes sur les autres,
le moteur étant réalisé de telle façon que les enroulements (2) puissent être produits avec une aiguille déplaçable autour de la dent (1) respective,
des lacunes étant prévues entre les enroulements (2) pour le passage d'une aiguille,
le moteur étant un moteur à rotor interne,
les modules de moteur étant, pour leur mise en série, réalisés de telle façon que leurs parties primaires recouvrent chaque fois un nombre pair de pôles de la partie secondaire, les modules de moteur étant reliés entre eux de manière constructive,
la distance centrale entre deux groupes de bobines étant toujours exactement égale à 1/3 de l'angle électrique qui est formé par les pôles recouverts par la partie primaire et les distances entre bobines à l'intérieur des groupes de bobines d'une phase sont prévues suffisamment étendues pour qu'il en résulte la même largeur de bobine dans le module de moteur et donc aussi les mêmes distances entre dents dans des parties primaires à noyau en fer.
